# EUROPÄISCHE PATENTSCHRIFT

(11) **EP 0 650 035 B1**
(45) Veröffentlichungstag und Bekanntmachung des Hinweises auf die Patenterteilung: **29.12.1997**
(21) Anmeldenummer: 94116587.0
(22) Anmeldetag: 20.10.1994
(51) Int. Cl.: G01F 1/66

(54) **Vorrichtung zur Durchflussmessung**
Flow meter
Débitmètre

(30) Priorität: 25.10.1993 DE 4336369
(43) Veröffentlichungstag der Anmeldung: 26.04.1995
(73) Patentinhaber: SIEMENS AKTIENGESELLSCHAFT, 80333 München (DE)
(72) Erfinder: Vontz, Thomas, Dr., D-81539 München (DE)

(56) Entgegenhaltungen:
- EP-A- 0 392 294
- WO-A-91/14925
- GB-A- 2 146 122
- JOURNAL OF PHYSICS E. SCIENTIFIC INSTRUMENTS, Bd.22, Nr.8, August 1989, BRISTOL GB Seiten 645 - 650, XP47483 G.A.JACKSON 'A three-path ultrasonic flowmeter for small-diameter pipelines'

## Beschreibung

Die Erfindung betrifft einen Massendurchflußmesser auf der Basis eines Ultraschalldurchflußmessers.

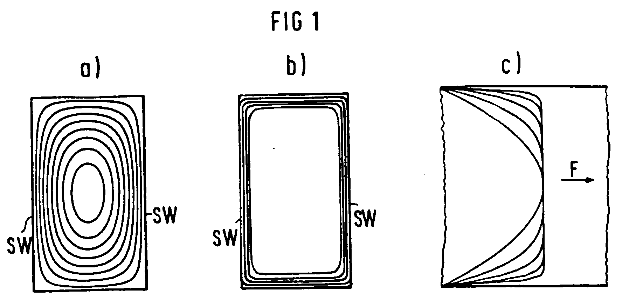

Bei der Durchflußmessung von bewegten flüssigen oder gasförmigen Medien (Fluiden) mit Ultraschall besteht das Problem, daß das vom Empfänger (Ultraschallwandler) gelieferte Meßsignal nicht nur vom Durchfluß, sondern auch vom jeweiligen Strömungsprofil im Meßrohr und der Art des durchströmenden Fluids abhängt. Je nach Strömungsgeschwindigkeit ergeben sich verschiedene Strömungsprofile. Das in Figur la gezeigte laminare Strömungsprofil in einem Rohr mit viereckigem Querschnitt tritt bei langsamer Strömungsgeschwindigkeit auf. Die im Inneren des Rohres eingezeichneten Linien veranschaulichen Bereiche gleicher Strömungsgeschwindigkeit. Laminare Strömungsprofile können durch eine parabolische Form, vgl. Figur lc, beschrieben werden. Die höchsten Strömungsgeschwindigkeiten treten in der Rohrmitte auf. Je größer der Durchfluß, also je höher die Strömungsgeschwindigkeit ist, desto mehr nähert sich das Strömungsprofil einer Kastenform an. Figur 1b zeigt ein turbulentes Strömungsprofil, das bei hohen Strömungsgeschwindigkeiten auftritt. In weiten Bereichen des Rohres bleibt die Strömungsgeschwindigkeit in etwa gleich.

Die bisher bekannten Ultraschallwandler haben eine annähernd gaußförmige Empfindlichkeitsverteilung. Die maximale Empfindlichkeit des Ultraschallwandlers liegt in dessen Zentrum. Zum Rand hin nimmt sie stark ab. Zusätzlich wird die Empfindlichkeit durch die Rohrwandeigenschaften stark beeinflußt, wenn durch die Rohrwand eingestrahlt wird.

Beschallt man nun mit einem Ultraschallwandler in einem Strömungskanal das bewegte Medium, wie dies aus der DE 40 10 148 Al bekannt ist, um aus der Schalllaufzeit oder mittels des Dopplereffekts die Strömungsgeschwindigkeit zu bestimmen, so wird, insbesondere bei laminarem Strömungsprofil, die in der Strömungskanalmitte auftretende höchste Strömungsgeschwindigkeit stärker bewertet als die am Rand des Strömungskanals auftretende niedrigere Strömungsgeschwindigkeit. Dies hat zur Folge, daß sich für jedes Strömungsprofil und für jedes Fluid eine eigene Meßkennlinie ergibt, was zu einer aufwendigen Auswerteeinheit führt.

Weiterhin ist bei dem in der DE 40 10 148 Al beschriebenen Durchflußmesser von Nachteil, daß das Ultraschallsignal sich aufgrund des Meßrohraufbaus nicht nur w-förmig, sondern auch auf einem parasitären v-förmigen Weg ausbreiten kann und deshalb zusätzliche Maßnahmen zur Unterdrückung der daraus resultierenden Signalanteile erforderlich sind.

In der EP 02 18 293 A1 wird ein Verfahren und eine Vorrichtung zur Bestimmung der Geschwindigkeit, Richtung und anderen Flußgrößen, insbesondere des Gasflußes angegeben. Ein stark gedämpftes akustisches Signal wird mittels eines ersten Wandlers in eine erste Richtung durch die Strömung in Richtung eines zweiten Wandlers ausgesandt, welcher ein gedämpftes elektrisches Signal erzeugt. Die erste Auslenkung des elektrischen Signals wird mit einem Schwellwert verglichen, welcher niedriger als der Maximalwert der besagten Auslenkung ist. Eine Überschreitung des Schwellwertes wird dazu genutzt, das Ende der Zeitmeßperiode, die beim Aussenden des akustischen Signals gestartet wurde, anzuzeigen. Ein Reflexionskörper wird gegenüber dem ersten Wandler angeordnet, um die akustischen Impulse, die von dem ersten Wandler ausgesandt wurden, durch die Strömung in verschiedene Richtungen zu einem oder mehreren weiteren Wandlern zu reflektieren.

L.C. Linworth beschreibt in "Ultrasonic Measurements for Process Control" Academic Press, San Diego, 1989, auf den Seiten 288 ff Durchflußmesser, deren Meßrohr mit einem Ultraschallsendewandler und einem Ultraschallempfangswandler versehen ist. Die Abstrahl- und Empfangsflächen der Ultraschallwandler sind derart abgeschrägt, daß der abgestrahlte Schall je nach Ausführungsform an einer, zwei oder vier Reflexionsstellen im Meßrohr reflektiert wird.

Der Erfindung liegt die Aufgabe zugrunde, eine Vorrichtung zu schaffen, die eine höhere Meßgenauigkeit hat und deren Meßsignal nurmehr vom Durchfluß und nicht mehr von der Art des verwendeten Fluids und dem vorliegenden Strömungsprofil abhängt.

Die Aufgabe wird erfindungsgemäß durch eine Vorrichtung gemäß dem Patentanspruch 1 gelöst.

Vorteilhafte Weiterbildungen der Erfindung ergeben sich aus den abhängigen Ansprüchen.

Die Aufgabe wird dadurch gelöst, daß die vom Zentrum des Ultraschallwandlers ausgehenden US-Wellen, mit Hilfe von Reflektoren in Richtung der Seitenwände des Strömungdkanals abgelenkt und dadurch aus dem Hauptstrahlengang ausgeblendet werden. Sie erreichen den Empfangswandler daher zu einem späteren Zeitpunkt und tragen so weniger zum Meßsignal bei. Die Empfindlichkeitsverteilung der Ultraschallwandler wird ausgemittelt. Es kommt zu einer gleichmäßigen Bewertung der im Strömungskanal vorherrschenden Strömungsgeschwindigkeiten.

Anhand der Figuren soll die Erfindung näher erläutert werden.
- Figur 1a, b, c: zeigt ein laminares und ein turbulentes Strömungsprofil im Strömungskanalquerschnitt und mögliche Strömungsprofile im Strömungskanal in der Seitenansicht.
- Figur 2: zeigt den prinzipiellen Aufbau der Meßvorrichtung.
- Figur 3: zeigt in der Dreiseitenansicht die Form eines Reflektors, wie er auch im Strömungskanal angebracht ist.
- Figur 4 und 5: zeigen weitere Möglichkeiten zur Anordnung der Ultraschallwandler.

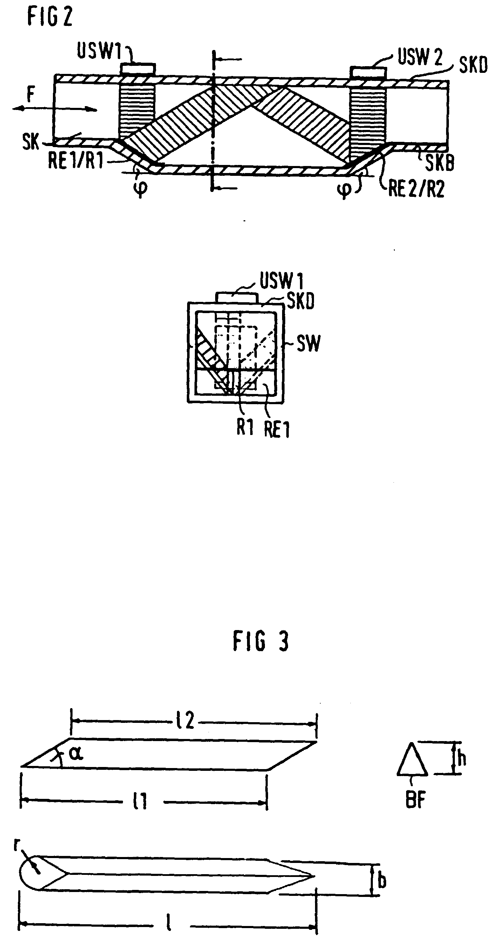

An den Wänden des in beliebiger Richtung F durchflossenen Strömungskanals SK (vergl. Figur 2) sind zwei in alternierender Folge als Sender und Empfänger arbeitende Ultraschallwandler USW 1 und USW2 angeordnet. Die den Ultraschallwandlern USW1 und USW2 gegenüberliegende Seite des Strömungskanals SK ist wannenförmig ausgebildet. Auf den um einen Winkel ϕ geneigten Seitenflächen der Wanne sind jeweils ein ebener Reflektor RE1, RE2 angeordnet, wobei jeder dieser Reflektoren RE1 bzw. RE2 in seiner Mitte ein in Fig. 3 dargestelltes Reflektorelement R1, R2 trägt. Der Winkel ϕ bestimmt sich aus dem US-Wandlerabstand und der Strömungskanalhöhe. Das vom Wandler USW1 senkrecht zur Strömungsrichtung des Mediums eingestrahle US-Signal trifft also zunächst auf den Reflektor RE1, wird an der Decke SKD des Strömungskanals SK reflektiert und von dem zweiten Reflektor RE2 in Richtung des als Empfänger arbeitenden US-Wandlers USW2 umgelenkt (w-förmiger Schallweg). Die vom Zentrum des Ultraschallwandlers USW1 ausgehenden US-Wellen treffen hingegen auf das Reflektorelement R1 und werden in Richtung der Seitenwände SW des Strömungskanals SK abgelenkt. Die auf diese Weise aus dem w-förmigen Hauptschallweg ausgeblendeten Ultraschallwellen erreichen zu einem späteren Zeitpunkt den Empfänger und tragen so weniger zum Meßsignal bei. Durch diese Maßnahme erreicht man eine gleichmäßigere Bewertung der sich im Strömungskanal SK einstellenden Strömungsgeschwindigkeiten.

Als geeignete Geometrie für die Reflektorelemente R1 und R2 hat sich die in Figur 3 gezeigte Form erwiesen. Die Reflektorelemente R1, R2 haben einen dreieckförmigen Querschnitt, vorteilhafterweise ist er als gleichschenkeliges Dreieck ausgebildet. Mit der Basisfläche BF werden die Reflektorelemente R1, R2 auf den ebenen Reflektoren RE1 und RE2 mittig montiert, wenn der Querschnitt die Form eines gleichschenkeligen Dreiecks hat. Grundsätzlich ist die Montageposition abhängig von der Querschnittsform der Reflektorelemente R1, R2. Die Reflektorkanten beschreiben in der Seitenansicht ein Parallelogramm. Die Seitenlängen l₁ und l₂ sind deshalb gleich lang. Der spitze Winkel α wurde so gewählt, daß die kurze Seite der Reflektorelemente R1, R2 mit dem Strömungskanalboden SKB eben verläuft.

Im in der Figur 2 beschriebenen Ausführungsbeispiel wurde ein viereckiger Strömungskanalquerschnitt gewählt. Genausogut ist ein runder oder ovaler Querschnitt denkbar.

Im nachfolgenden sind Variationsmöglichkeiten zum Aufbau der erfindungsgemäßen Meßvorrichtung angegeben:
- Wandler verschiedener Durchmesser
- Aufgesetzte und/oder eingesetzte Wandler
- Kombination mit Strahlführungen in "V", "W" oder anderer Zickzack Form.

- quadratischer Strömungskanalquerschnitt
- rechteckiger Strömungskanalquerschnitt
- Polygonströmungskanalquerschnitt (z.B. Sechseck)
- ovaler oder runder Strömungskanalquerschnitt
- kombinierte Strömungskanalquerschnitte

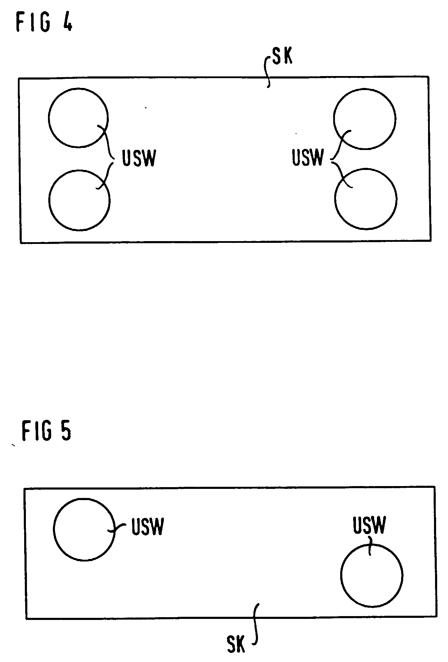

- Sende- u. Empfangswandler auf einer Seite des Strömungskanals
- Sende- u. Empfangswandler gegenüberliegend
- Sende- u. Empfangswandler axial versetzt (siehe Figur 5)
- mehrere Sende- u. Empfangswandler verteilt auf verschiedenen Wänden des Strömungskanals (siehe Figur 4)

Die erfindungsgemäße Meßvorrichtung ist nicht nur für die Durchflußmessung verschiedenster Flüssigkeiten geeignet, sondern auch für die Durchflußmessung verschiedenster Gase und auch für die, als Wärmezähler bezeichneten, Wasser-Durchflußmesser in Heiz-/Kühlsystemen.

Die Vorrichtung zur Durchflußmessung zeigt bereits unter Verwendung von nur einem ebenen Reflektor mit aufgesetztem Reflektorelement eine verbesserte Meßgenauigkeit. So ist es nicht zwingend erforderlich den zweiten Reflektor RE2 ebenfalls mit einem dreiecksförmigen Reflektorelement auszustatten.

Die Reflektoren RE1, R1 bzw. RE2,R2 können aus Metall oder aus Kunststoff, vorteilhafter Weise aus einem spritzgußfähigem Kunststoff bestehen. Nicht geeignet sind weiche Materialien wie z.B. Gummi.

Eine weitere Verbesserung der Meßgenauigkeit läßt sich durch eine Serienschaltung zweier Meßvorrichtungen erzielen. Die zweite Meßvorrichtung ist dabei um 90° um die Längsachse des Strömungskanals SK gegenüber der ersten Meßvorrichtung gedreht. Sinnvoller Weise wird ein derartiger Aufbau dann gewählt, wenn das Fluid schraubenförmig durch den Strömungskanal SK strömt, was beispielsweise durch zwei aufeinander folgende Leitungskrümmer verursacht werden kann.

Geeignete Ultraschallwandler haben vorteilhafter Weise einen Durchmesser im Bereich von 10...20mm. Die Betriebsfrequenz liegt bei ca. 2 MHz.

## Patentansprüche

1. Vorrichtung zur Durchflußmessung
- bei der ein Strömungskanal (SK) mit einem ersten Ultraschallwandler (USW1) und einem zweiten Ultraschallwandler (USW2) und mit einem im Strömungskanal (SK) angeordneten ersten Reflektor (RE1) und einem zweiten Reflektor (RE2) vorgesehen ist, und
- bei der im Strömungskanal (SK) im Ultraschall-Hauptstrahlweg ein die Ultraschallwellenfront aufweitendes erstes Reflektorelement (R1) angeordnet ist, so daß die vom Zentrum eines Ultraschallwandlers ausgehenden US-Wellen, mit Hilfe der Reflektoren in Richtung der Seitenwände des Strömungskanals abgelenkt und dadurch aus dem Hauptstrahlengang ausgeblendet werden.

2. Vorrichtung nach Anspruch 1,
- bei der der Querschnitt des ersten Reflektorelements (R1) dreiecksförmig ist.

3. Vorrichtung nach Anspruch 1 oder 2,
- bei der das erste Reflektorelement (R1) mittig auf dem ersten Reflektor (RE1) angeordnet ist.

4. Vorrichtung nach Anspruch 1, 2 oder 3,
- bei der im Strömungskanal (SK) ein zweites die Ultraschallwellenfront aufweitendes Reflektorelement (R2) angeordnet ist.

5. Vorrichtung nach Anspruch 4,
- bei der der Querschnitt des zweiten Reflektorelements (R2) dreiecksförmig ist.

6. Vorrichtung nach Anspruch 4 oder 5,
- bei der das zweite Reflektorelement (R1) mittig auf dem zweiten Reflektor (RE2) angeordnet ist.

7. Vorrichtung nach einem der vorigen Ansprüche,
- bei der der erste Reflektor (RE1) gegenüber dem ersten Ultraschallwandler (USW1) und der zweite Reflektor (RE2) gegenüber dem zweiten Ultraschallwandler (USW2) angeordnet ist.

## Claims

1. Flowmeter device
- in which a flow channel (SK) having a first ultrasound transducer (USW1) and a second ultrasound transducer (USW2) and having a first reflector (RE1) arranged in the flow channel (SK) and a second reflector (RE2) is provided, and
- in which a first reflector element (R1) which expands the ultrasound wavefront is arranged in the main beam path of the ultrasound in the flow channel (SK), so that US waves transmitted from the centre of an ultrasound transducer are deviated with the aid of the reflectors in the direction of the side walls of the flow channel and are thereby excluded from the main beam path.

2. Device according to Claim 1,
- in which the cross-section of the first reflector element (R1) is triangular.

3. Device according to Claim 1 or 2,
- in which the first reflector element (R1) is arranged centrally on the first reflector (RE1).

4. Device according to Claim 1, 2 or 3,
- in which a second reflector element (R2) which expands the ultrasound wavefront is arranged in the flow channel (SK).

5. Device according to Claim 4,
- in which the cross-section of the second reflector element (R2) is triangular.

6. Device according to Claim 4 or 5,
- in which the second reflector element (R2) is arranged centrally on the second reflector (RE2).

7. Device according to one of the preceding claims,
- in which the first reflector (RE1) is arranged facing the first ultrasound transducer (USW1) and the second reflector (RE2) is arranged facing the second ultrasound transducer (USW2).

## Revendications

1. Dispositif de mesurage du débit
- dans lequel un canal d'écoulement (SK) est pourvu d'un premier transducteur à ultra-sons (USW1) et d'un deuxième transducteur à ultra-sons (USW2) et d'un premier réflecteur (RE1) disposé dans un canal d'écoulement (SK) et d'un deuxième réflecteur (RE2), et
- dans lequel est disposé, dans le canal d'écoulement (SK) dans le trajet principal du rayon à ultra-sons, un premier élément réflecteur (R1) élargissant le front des ondes à ultra-sons de sorte que les ondes à ultra-sons partant du centre d'un transducteur à ultra-sons sont déviées à l'aide des réflecteurs dans le sens des parois latérales du canal d'écoulement et sont de ce fait supprimées de la trajectoire principale du rayon.

2. Dispositif selon la revendication 1,
- dans lequel la section transversale du premier élément réflecteur (R1) est de forme triangulaire.

3. Dispositif selon les revendications 1 ou 2,
- dans lequel le premier élément réflecteur (R1) est disposé au milieu sur le premier réflecteur (RE1).

4. Dispositif selon les revendications 1, 2 ou 3,
- dans lequel est disposé dans le canal d'écoulement (SK) un deuxième élément réflecteur (R2) élargissant le front des ondes à ultra-sons.

5. Dispositif selon la revendication 4,
- dans lequel la section transversale du deuxième élément réflecteur (R2) est de forme triangulaire.

6. Dispositif selon les revendications 4 ou 5,
- dans lequel le deuxième élément réflecteur (R1) ) est disposé au milieu sur le deuxième réflecteur (RE2).

7. Dispositif selon l'une des revendications précédentes,
- dans lequel le premier réflecteur (RE1) est disposé en face du premier transducteur à ultra-sons (USW1) et le deuxième réflecteur (RE2) en face du deuxième transducteur à ultra-sons (USW2).
